# EUROPÄISCHE PATENTSCHRIFT

(11) **EP 3 398 801 B1**
(45) Veröffentlichungstag und Bekanntmachung des Hinweises auf die Patenterteilung: **01.01.2020**
(21) Anmeldenummer: 18166455.8
(22) Anmeldetag: 10.04.2018
(51) Int. Cl.: B60K 26/02

(54) **MANUELL BEDIENBARE HEBELEINRICHTUNG**
MANUALLY OPERABLE LEVER DEVICE
DISPOSITIF LEVIER À COMMANDE MANUELLE

(30) Priorität: 05.05.2017 DE 102017109691
(43) Veröffentlichungstag der Anmeldung: 07.11.2018
(73) Patentinhaber: Grammer AG, 92224 Amberg (DE)
(72) Erfinder: VLOEMANS, Eric, 2250 Olen (BE)
(74) Vertreter: Hannke, Christian

(56) Entgegenhaltungen:
- EP-A2- 1 099 588
- WO-A1-2011/120705
- CN-U- 204 736 705
- US-A- 3 869 937
- US-A1- 2014 060 487

## Beschreibung

Die Erfindung betrifft eine manuell bedienbare Hebeleinrichtung gemäß dem Oberbegriff des Patentanspruches 1.

Derartige Hebeleinrichtungen werden beispielsweise in geländegängigen Fahrzeugen ("off-highway vehicles") eingesetzt, um die Drehzahl des Fahrzeugmotors zu regeln, und weisen daher die Funktion eines Gashebels auf.

US 3 869 937 A offenbart eine manuell bedienbare Hebeleinrichtung zur Regelung eines Werts einer Motordrehzahl eines Fahrzeugs wobei die Hebeleinrichtung ein erstes, ein zweites und ein drittes Hebelelement umfasst, welche jeweils mittels eines ersten Endes um eine gemeinsame erste Drehachse verschwenkbar angeordnet sind, wobei mittels einer Verschwenkung des ersten Hebelelements um die erste Drehachse der Wert der Motordrehzahl veränderbar ist. Allerdings ist es bisher aus dem Stand der Technik bekannt, zusätzliche Einrichtungen zur Drehzahlbegrenzung oder Einrichtungen zur Drehzahlreferenzierung auf einen bestimmten Wert der Motordrehzahl als separate Einrichtungen baulich unabhängig vom eigentlichen Gashebel anzuordnen. Das führt dazu, dass der Fahrzeuginsasse den Gashebel manuell bedienen muss, davon aber abgelenkt wird, wenn er versucht, einen Maximalwert oder einen bestimmten Referenzwert für diese Motordrehzahl festzulegen, weil er zur Bedienung der oben genannten zusätzlichen Einrichtungen sein Augenmerk auf einen anderen Teil des Fahrzeugs richten muss. Eine intuitive Bedienung der Hebeleinrichtung ist somit nicht möglich.

Der Referenzwert entspricht dabei beispielsweise einem vorbestimmten Drehzahlwert, welcher sich für die Fortbewegung des Fahrzeugs in einem bestimmten Gelände als besonders vorteilhaft herausgestellt hat, und demzufolge seitens des Fahrers in einem vergleichbaren Gelände voreingestellt wird. Der Maximalwert der Drehzahl kann beispielsweise festgelegt werden, um eine bestimmte Geschwindigkeit des Fahrzeugs nicht unbeabsichtigt zu überschreiten bzw. ein vorgegebenes Tempolimit einzuhalten. Dies gilt demnach nicht nur für die aktuelle Drehzahl, sondern auch als Maximalwert für den einstellbaren Referenzwert.

Aufgabe der Erfindung ist es daher, eine manuell bedienbare Hebeleinrichtung zur Verfügung zu stellen, welche alle drei genannten Funktionen erfüllt, dabei intuitiv bedienbar und kostengünstig herstellbar ist.

Gelöst wird diese Aufgabe gemäß den Merkmalen des Patentanspruches 1.

Ein wesentlicher Punkt der Erfindung liegt darin, dass ein manuell bedienbare Hebeleinrichtung zur Regelung eines Werts einer Motordrehzahl eines Fahrzeugs bereitgestellt wird, welche ein erstes, ein zweites und ein drittes Hebelelement umfasst, welche jeweils mittels eines ersten Endes um eine gemeinsame erste Drehachse verschwenkbar angeordnet sind, wobei mittels einer Verschwenkung des ersten Hebelelements um die erste Drehachse der Wert der Motordrehzahl veränderbar ist, mittels einer Verschwenkung des zweiten Hebelelements um die erste Drehachse eine Referenzposition für das erste Hebelelement einstellbar ist, und mittels einer Verschwenkung des dritten Hebelelements um die erste Drehachse eine Maximalposition für das erste und/ oder das zweite Hebelelement einstellbar ist.

Damit sind alle drei notwendigen Funktionen, nämlich die Regelung der Drehzahl, die Einstellung eines Referenzwerts für die Drehzahl und die Einstellung eines maximalen Werts für die Drehzahl jeweils mittels Hebelelementen einer gemeinsamen Hebeleinrichtung abgebildet. Gleichzeitig ist gewährleistet, dass zur Ausübung der drei Funktionen nur jeweils eine Verschwenkung des ersten, zweiten und/ oder dritten Hebelelements um die erste Drehachse durchgeführt werden muss.

Gemäß einer bevorzugten Variante der Hebeleinrichtung ist es vorgesehen, dass an einem zweiten Ende des dritten Hebelelements ein erstes Anschlagelement ausgebildet ist, mittels welchem ein an einem zweiten Ende des ersten Hebelelements angeordnetes erstes Gegenanschlagelement wechselwirkbar ist.

Mit anderen Worten ist bevorzugt das erste Hebelelement hinsichtlich einer Verschwenkung um die erste Drehachse zumindest in eine erste Drehrichtung vom dritten Hebelelement stoppbar. Das erste Hebelelement kann also nicht weiter in die erste Drehrichtung gedreht werden als bis zum dritten Hebelelement. Damit ist also eine Veränderung der Motordrehzahl über einen bestimmten, mittels einer Position des dritten Hebelelements festlegbaren Maximalwert hinaus nicht möglich.

Ebenfalls vorteilhaft ist es, wenn am zweiten Ende des dritten Hebelelements ein zweites Anschlagelement ausgebildet ist, mittels welchem ein an einem zweiten Ende des zweiten Hebelelements angeordnetes zweites Gegenanschlagelement wechselwirkbar ist.

Mit anderen Worten ist bevorzugt das zweite Hebelelement hinsichtlich einer Verschwenkung um die erste Drehachse zumindest in eine erste Drehrichtung vom dritten Hebelelement stoppbar. Das zweite Hebelelement kann also nicht weiter in die erste Drehrichtung verschwenkt werden als bis zum dritten Hebelelement. Damit ist also eine Veränderung der Referenzdrehzahl über einen bestimmten, mittels einer Position des dritten Hebelelements festlegbaren Maximalwert hinaus nicht möglich.

Bevorzugt sind die genannten ersten Drehrichtungen gleich. Beispielsweise verschwenken die Hebelelemente bei einer Verschwenkung in die erste Drehrichtung in Fahrtrichtung (bei einer Vorwärtsfahrt).

Dem Fachmann ist dabei bewusst, dass diese Begrenzung analog auch für einen Minimalwert der Motordrehzahl gelten könnte, indem das erste und/ oder das zweite Hebelelement hinsichtlich einer Verschwenkung um die erste Drehachse zumindest in eine zweite Drehrichtung vom dritten Hebelelement stoppbar sind. Beispielsweise verschwenken die Hebelelemente bei einer Verschwenkung in die zweite Drehrichtung entgegen der Fahrtrichtung (bei der Vorwärtsfahrt). In den meisten Fällen wird jedoch die Einstellbarkeit eines Maximalwerts der Motordrehzahl bevorzugt.

Besonders bevorzugt ist es ferner, wenn das erste Hebelelement und das zweite Hebelelement zueinander hinsichtlich der Verschwenkung um die erste Drehachse kontaktlos und/ oder wechselwirkungsfrei ausgestaltet sind. Insbesondere sind die zweiten Enden des ersten und zweiten Hebelelements zueinander hinsichtlich der Verschwenkung um die erste Drehachse kontaktlos und/ oder wechselwirkungsfrei ausgestaltet.

Das heißt, dass dem Fahrzeugführer mittels des zweiten Hebelelements eine Referenzposition vorgebbar ist, die er aber jederzeit mittels einer Verschwenkung in die erste oder in die zweite Drehrichtung über- oder unterschreiten kann. Der Vorteil liegt hier dabei, dass eine Position des ersten Hebelelements problemlos an die Position des zweiten Hebelelements angleichbar ist. Dabei muss vorteilhaft kein Blickkontakt zur Hebeleinrichtung aufgenommen werden; der Fahrzeugführer muss nur das erste Hebelelement zum zweiten Hebelelement hinverschwenken, bis die entsprechenden Positionen der beiden Hebelelemente übereinstimmen. In diesem Fall weiß der Fahrer, dass das erste Hebelelement die mittels des zweiten Hebelelements voreingestellte und vorgegebene Referenzposition erreicht hat.

Gemäß einer vorteilhaften Ausführungsform ist es vorgesehen, dass das erste, das zweite und das dritte Hebelelement jeweils mittels einer Überwindung eines Haftreibmoments aus einer momentanen Position um die erste Drehachse auslenkbar und mittels einer Überwindung eines Gleitreibmoments um die erste Drehachse verschwenkbar sind, wobei ein Wert eines ersten Haftreibmoments des ersten Hebelelements kleiner ist als ein Wert eines zweiten Haftreibmoments des zweiten Hebelelements und als ein Wert eines dritten Haftreibmoments des dritten Hebelelements, und/ oder wobei ein Wert eines ersten Gleitreibmoments des ersten Hebelelements kleiner ist als ein Wert eines zweiten Gleitreibmoments des zweiten Hebelelements und als ein Wert eines dritten Gleitreibmoments des dritten Hebelelements.

Mit anderen Worten ist zur Verschwenkung des ersten Hebelelements eine kleinere Kraft notwendig als zur Verschwenkung des zweiten und des dritten Hebelelements. Der Fahrzeugführer spürt beispielsweise einen geringen Widerstand gegen die geplante Verschwenkbewegung und weiß somit ohne Blickkontakt zur Hebeleinrichtung, dass er das erste Hebelelement greift. Gleichzeitig spürt er einen stärkeren Widerstand, wenn er das zweite oder das dritte Hebelelement greift. Damit ist beispielsweise gewährleistet, dass der Fahrzeugführer beim Aufbringen einer bestimmten Kraft nur das erste Hebelelement verschwenkt (und damit nur die aktuelle Drehzahl verstellt) und nicht versehentlich zusätzlich das zweite und/ oder das dritte Hebelelement verschwenkt (und damit versehentlich den Referenzwert und/ oder den Maximalwert der Drehzahl verstellt).

Um einen Wert der Reibmomente unterschiedlich ausgestalten zu können, ist es vorteilhaft, wenn das erste Hebelelement mit einem mit der ersten Drehachse fluchtenden Wellenelement der Hebeleinrichtung starr verbunden ist, wobei das Wellenelement zumindest indirekt mit einer zumindest in radialer Richtung des Wellenelements wirkenden und mittels eines ersten Friktionselements applizierten ersten Kraft beaufschlagbar ist.

Das Wellenelement weist dabei beispielsweise an einer ersten Stirnfläche Erhebungen auf, welche in am ersten Ende des ersten Hebelelements angeordnete und bevorzugt komplementär zu den genannten Erhebungen ausgestaltete Aussparungen eingreifen, beispielsweise als eine Art Nut-Feder-Verbindung. Damit ist das erste Hebelelement hinsichtlich einer Verdrehung um das Wellenelement fixiert.

Eine Relativbewegung des ersten Hebelelements zum Wellenelement in Richtung der ersten Drehachse kann beispielsweise dadurch vermieden werden, dass ein Montageelement das erste Hebelelement und das Wellenelement in axialer Richtung miteinander verspannt. Beispielsweise ist eine Schraube angeordnet, deren Außengewinde mit einem Innengewinde einer Bohrung des Wellenelements wechselwirkt. Der Flansch des Schraubenkopfs ist dabei beispielsweise kontaktierend mit dem ersten Ende des ersten Hebelelements ausgebildet. Somit ist also eine starre Verbindung zwischen dem ersten Hebelelement und dem Wellenelement ausgebildet.

Vorteilhaft ist das erste Friktionselement in Form eines Friktionsdrahts ausgestaltet, welcher in radialer Richtung des Wellenelements vorgespannt in einem Gehäuse der Hebeleinrichtung gelagert ist.

Der Friktionsdraht ist in einem nicht-eingebauten Zustand bevorzugt unverformt und/ oder gerade verlaufend ausgebildet. Weiterhin ist er in einem ins Gehäuse eingebauten Zustand und damit vorgespannten Zustand bevorzugt verformt und/ oder gebogen ausgebildet.

Gemäß einer weiteren bevorzugten Ausführungsform ist das zweite und/ oder das dritte Hebelelement zumindest indirekt mit einer zumindest in Richtung der ersten Drehachse wirkenden zweiten Kraft eines zweiten Friktionselements und/ oder einer in Richtung der ersten Drehachse wirkenden dritten Kraft eines dritten Friktionselements beaufschlagbar.

Durch die in axialer Richtung wirkende zweite und/ oder dritte Kraft kann vorteilhaft über einen großen Flächenbereich des zweiten und/ oder des dritten Hebelelements die Kraft appliziert werden. Der Flächenbereich ist dabei vorteilhaft am ersten Ende des jeweiligen Hebelelements angeordnet. Über die Gestaltung des zweiten und dritten Friktionselements kann die Größe der zweiten bzw. die dritte Kraft beeinflusst werden. Über die Auswahl der Flächengröße des Flächenbereichs kann die entsprechende mechanische Spannung beeinflusst werden.

Vorteilhaft erfolgt die Beaufschlagung des zweiten und/ oder dritten Hebelelements über jeweils zwei Buchsen, welche im Gehäuse der Hebeleinrichtung und vorteilhaft das erste Ende des zweiten und/ oder dritten Hebelelements umgebend angeordnet sind. Bevorzugt sind die zentralen Aussparungen dieser Buchsen fluchtend zur ersten Drehachse angeordnet.

Weiterhin bevorzugt sind die Buchsen hinsichtlich einer Verdrehung um die erste Drehachse fixiert angeordnet. Mit anderen Worten sind die Buchsen verdrehfest um die erste Drehachse angeordnet. Dazu kann an einem Innendurchmesser der Aussparung der Buchsen beispielsweise ein Rastelement angeordnet sein, welches mit einem Gegenrastelement des Gehäuses wechselwirkt. Denkbar ist, dass die Buchsen als Sinterbundbuchsen ausgestaltet sind, welche also für eine Lagerung und gleichzeitig für eine Schmierung der Bewegungen des zweiten und/ oder des dritten Hebelelements sorgen.

Weiterhin ist es bevorzugt, dass das zweite und/ oder das dritte Friktionselement in Form einer Friktionsplatte ausgestaltet ist, welche in Richtung der ersten Drehachse vorgespannt im Gehäuse der Hebeleinrichtung gelagert ist. Durch eine möglichst große Anlagefläche des zweiten und/ oder dritten Friktionselemente an das zweite und/ oder dritte Hebelelement oder eben an die Buchsen kann die zweite Kraft maximiert werden.

Um eine äußerst intuitive Bedienung der Hebeleinrichtung zu gewährleisten, ist es vorteilhaft, wenn an den oberen Enden des ersten, zweiten und dritten Hebelelements angeordnete Griffflächen in einer gemeinsamen Position der drei Hebelelemente zueinander zumindest paarweise parallel und/ oder bündig angeordnet sind.

Insbesondere ist es aus der Praxis bekannt, dass ein Fahrzeuginsasse einen Gashebel mit drei Fingern seiner (rechten) Hand bedient: dem Daumen, dem Zeigefinger und dem Mittelfinger. Die vorliegende Hebeleinrichtung bietet in einer gemeinsamen Position der drei Hebelelemente die Möglichkeit, dass die Kontaktfläche zu diesen Fingern zwar mittels unterschiedlicher Hebelelemente ausgebildet ist, deren zweite Enden aber, insbesondere durch die Anordnung der Griffflächen, dennoch miteinander einen einzelnes Griffelement ausbilden.

Dabei ist die gemeinsame Position mechanisch vorteilhaft dadurch festgelegt, dass beide Anschlagelemente des dritten Hebelelements mit beiden Gegenanschlagsflächen der anderen beiden Hebelelemente wechselwirken. In Bezug auf die Drehzahl heißt dies, dass in der gemeinsamen Position die Position jedes Hebelelements jeweils auf den gleichen Wert der Motordrehzahl übertragbar ist. Beispielsweise ist in der gemeinsamen Position der drei Hebelelemente ein Volumen des resultierenden Griffelements bis auf die Kontaktbereiche der drei Hebelelemente zueinander aussparungsfrei.

Die geometrische Anordnung der drei Hebelelemente wird bevorzugt durch die dazu komplementäre Form des Gehäuses unterstützt. Das Gehäuse ist bevorzugt als Spritzgussteil beispielsweise aus einem Kunststoff mit oder ohne Glasfaser- (GFK) oder Kohlefaserverstärkung (CFK) ausgebildet, wodurch auch komplexe Formen und Geometrien auf einfache und kostengünstige Weise abbildbar sind. Außerdem ist für eine ausreichende Festigkeit zur Aufnahme der resultierenden Kräfte und Momente gesorgt.

Es ist denkbar, dass zunächst mindestens die drei Hebelelemente in einer Art Vormontagebaugruppe, beispielsweise mit Hilfe eines Schnittstellenelements, montiert werden.

Alle Teile der erfindungsgemäßen Hebeleinrichtung sind einfach und kostengünstig zu produzieren, vor allem in Hinblick auf eine Serienfertigung, und/ oder stellen sogar Normteile dar. Die Bauweise der Hebeleinrichtung ist aufgrund der Form und Funktion der einzelnen Bauteile kompakt.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1a, 1b: perspektivische Ansichten ausgewählter Komponenten der erfindungsgemäßen Hebeleinrichtung;
- Fig. 2a-2d: Seitenansichten ausgewählter Komponenten der erfindungsgemäßen Hebeleinrichtung;
- Fig. 3: eine Explosionsdarstellung der erfindungsgemäßen Hebeleinrichtung;
- Fig. 4a, 5a: Seitenansichten der erfindungsgemäßen Hebeleinrichtung;
- Fig. 4b, 5b: Schnittansichten der erfindungsgemäßen Hebeleinrichtung.

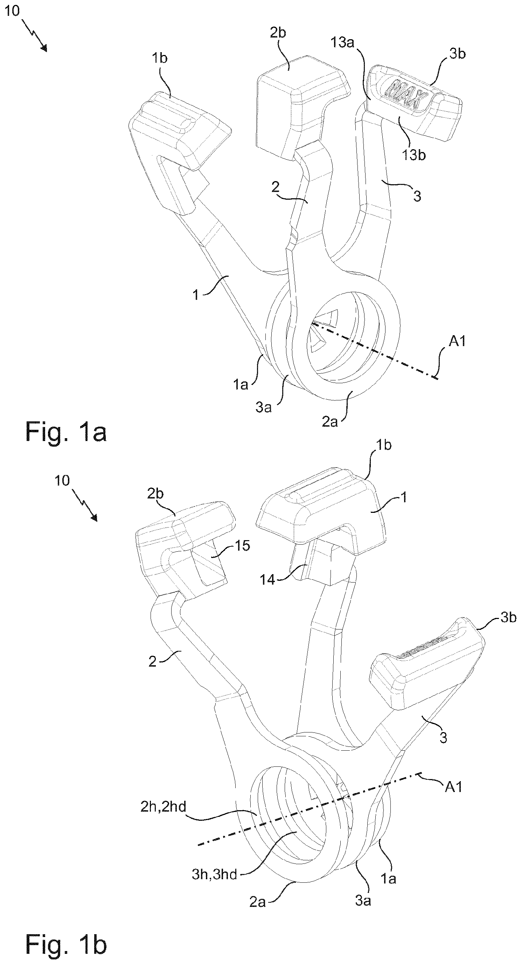

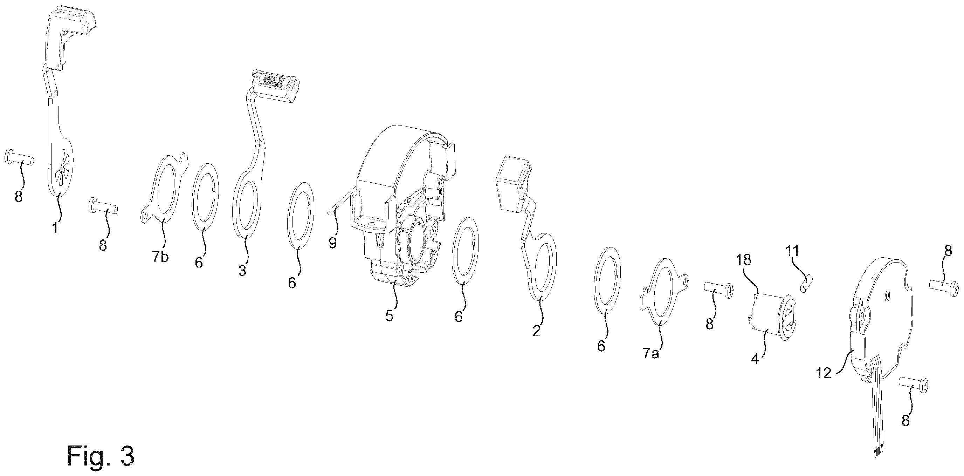

In Fig. 1a und 1b sind jeweils perspektivische Ansichten ausgewählter Komponenten der erfindungsgemäßen manuell bedienbaren Hebeleinrichtung 10 zur Regelung eines Werts einer Motordrehzahl eines Fahrzeugs gezeigt. Aus Gründen der Übersichtlichkeit sind demnach neben der erste Drehachse A1 lediglich ein erstes 1, ein zweites 2 und ein drittes Hebelelement 3 der manuell bedienbaren Hebeleinrichtung 10 gezeigt, welche jeweils mittels eines ersten Endes 1a, 2a, 3a um die gemeinsame erste Drehachse A1 verschwenkbar angeordnet sind. Mittels einer Verschwenkung des ersten Hebelelements 1 um die erste Drehachse A1 ist dabei der Wert der Motordrehzahl veränderbar (die Beschreibung der Figur 3 gibt dabei Aufschluss darüber, inwiefern die Drehbewegung des ersten Hebelelements 1 um die erste Drehachse A1 übersetzbar ist in eine Änderung des Werts der Motordrehzahl).

Ferner ist mittels einer Verschwenkung des zweiten Hebelelements 2 um die erste Drehachse A1 eine Referenzposition für das erste Hebelelement 1 einstellbar. Es gibt also eine momentane Position des zweiten Hebelelements 2, welche übersetzbar ist in einen bestimmten Wert der Motordrehzahl, eine Referenzposition für das erste Hebelelement 1 vor.

Außerdem ist mittels einer Verschwenkung des dritten Hebelelements 3 um die erste Drehachse A1 eine Maximalposition für das erste 1 und/ oder das zweite Hebelelement 2 einstellbar. Es gibt also eine momentane Position des dritten Hebelelements 3, welche übersetzbar ist in einen bestimmten Wert der Motordrehzahl, jeweils eine Maximalposition für das erste 1 und/ oder das zweite Hebelelement 2 vor.

Diese Maximalposition kann seitens des ersten 1 und/ oder des zweiten Hebelelements 2 mechanisch nicht überschritten werden. Damit kann auch mittels des ersten Hebelelements 1 der Wert der Motordrehzahl über diesen bestimmten Wert hinaus nicht verändert und insbesondere nicht erhöht werden. Gleichzeitig kann auch mittels des zweiten Hebelelements 2 ein Referenzwert der Motordrehzahl über diesen bestimmten Wert hinaus nicht verändert und insbesondere nicht erhöht werden.

Das erste 1, das zweite 2 und das dritte Hebelelement 3 ist jeweils mittels einer Überwindung eines Haftreibmoments aus einer momentanen Position um die erste Drehachse A1 auslenkbar und mittels einer Überwindung eines Gleitreibmoments um die erste Drehachse A1 verschwenkbar.

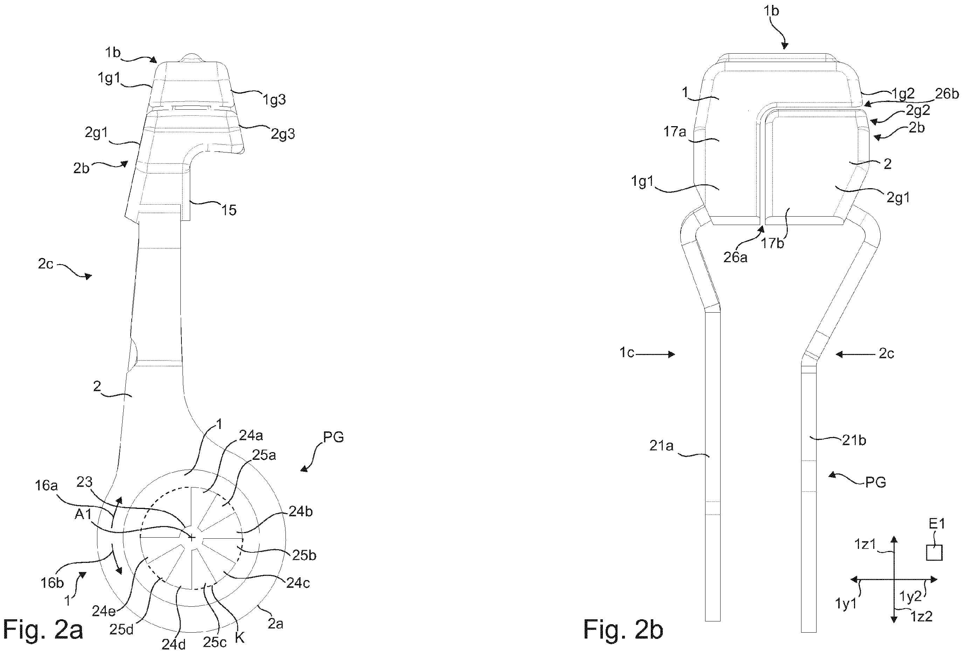

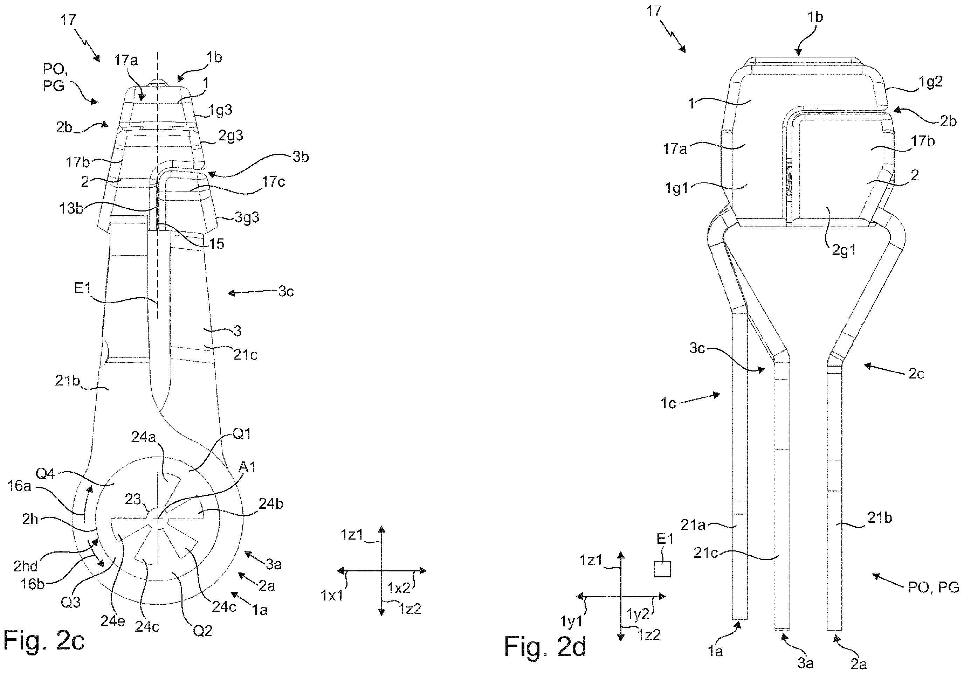

Die Figuren 2a, 2b, 2c und 2d zeigen nun Seitenansichten ausgewählter Komponenten der erfindungsgemäßen manuell bedienbaren Hebeleinrichtung 10.

An den oberen Enden 1b, 2b, 3b des ersten 1, zweiten 2 und dritten Hebelelements 3 angeordnete Griffflächen 1g1, 1g2, 1g3; 2g1, 2g2; 3g3 sind dabei in einer gemeinsamen Position P0 der drei Hebelelemente 1, 2, 3 zueinander zumindest paarweise 1g1, 2g1; 1g2, 2g2; 1g3; 2g3, 3g3 parallel und/ oder bündig angeordnet.

Gemäß der Fig. 2c ist zu sehen, dass am zweiten Ende 3b des dritten Hebelelements 3 ein zweites Anschlagelement 13b ausgebildet ist, mittels welchem ein an einem zweiten Ende 2b des zweiten Hebelelements 2 angeordnetes zweites Gegenanschlagelement 15 wechselwirkbar ist.

Das zweite Hebelelement 2 ist also hinsichtlich einer Verschwenkung um die erste Drehachse A1 zumindest in eine erste Drehrichtung 16a vom dritten Hebelelement 3 stoppbar. Das zweite Hebelelement 2 kann also nicht weiter in die erste Drehrichtung 16a verschwenkt werden als bis zum dritten Hebelelement 3. Damit ist also eine Veränderung der Referenzdrehzahl über einen bestimmten, mittels einer Position des dritten Hebelelements 3 festlegbaren Maximalwert hinaus nicht möglich. In die entgegengesetzte Drehrichtung 16b ist hingegen ein Verschwenken des zweiten Hebelelements 2 möglich.

Bevorzugt weist das zweite Ende 1b des ersten Hebelelements 1 den größten Abstand zur ersten Drehachse A1 auf, gefolgt von einem Abstand des zweiten Endes 2b des zweiten Hebelelements 2 zur ersten Drehachse A1 und dann vom Abstand des zweiten Endes 3b des dritten Hebelelements 3 zur ersten Drehachse A1. Diese Angaben gelten jeweils für den auf die Höhenrichtung 1z1, 1z2 bezogenen Abstand.

Es umfassen alle drei Hebelelemente 1, 2, 3 jeweils ein am zweiten Ende 1b, 2b, 3b angeordnetes und/ oder dieses Ende 1b, 2b, 3b ausbildendes Griffelement 17a, 17b, 17c und jeweils ein Lagerelement 21a, 21b, 21c, welches sich jeweils ausgehend vom Griffelement 17a, 17b, 17c bis zum ersten Ende 1a, 2a, 3a des jeweiligen Hebelelements 1, 2, 3 erstreckt und dieses insbesondere ausbildet.

Das Lagerelement 21a, 21b, 21c ist bevorzugt jeweils als zumindest teilweise gebogenes Blechelement ausgestaltet und/ oder über seine gesamte Erstreckung mit einer homogenen Dicke ausgestaltet. Ausgenommen von der homogenen Dicke sind hierbei die Radien und Verdickungen, welche durch das Abkanten des Blechs resultieren. Denkbar wäre, dass das Griffelement 17a, 17b, 17c als Spritzgussteil ausgebildet ist und um das Lagerelement 21a, 21b, 21c herumgespritzt angeordnet ist.

Zwischen dem ersten 1a, 2a, 3a und dem zweiten Ende 1b, 2b, 3b der drei Hebelelemente 1, 2, 3 ist jeweils ein mittlerer Abschnitt 1c, 2c, 3c angeordnet, welcher das Lagerelement 21a, 21b, 21c zumindest teilweise umfasst und insbesondere vollständig mittels dieses Lagerelements 21a, 21b, 21c ausgebildet ist. In diesem mittleren Abschnitt 1c, 2c, 3c weist das Lagerelement 21a, 21b, 21c jeweils bevorzugt jeweils Biegungen auf. Am ersten Ende 1a, 2a, 3a der drei Hebelelemente 1, 2, 3 ist das Lagerelement 21a, 21b, 21c jeweils bevorzugt planar ausgebildet. Ein äußerer Umfang der drei Hebelelemente 1, 2, 3 am ersten Ende 1a, 2a, 3a ist hierbei bevorzugt zumindest teilweise in Form eines Kreises ausgebildet.

Die Lagerelemente 21a, 21b, 21c sind bevorzugt zumindest im mittleren Abschnitt 1c, 2c, 3c nicht identisch zueinander ausgebildet. Insbesondere weisen sie unterschiedliche Biegungen und/ oder Biegeradien auf. Wie gemäß der Fig. 2d zu sehen ist, sind in der gemeinsamen Position P0 die mittleren Abschnitte 1c und 2c hinsichtlich der Richtungen 1y1, 1y2 jeweils außen und den mittleren Abschnitt 3c umgebend angeordnet.

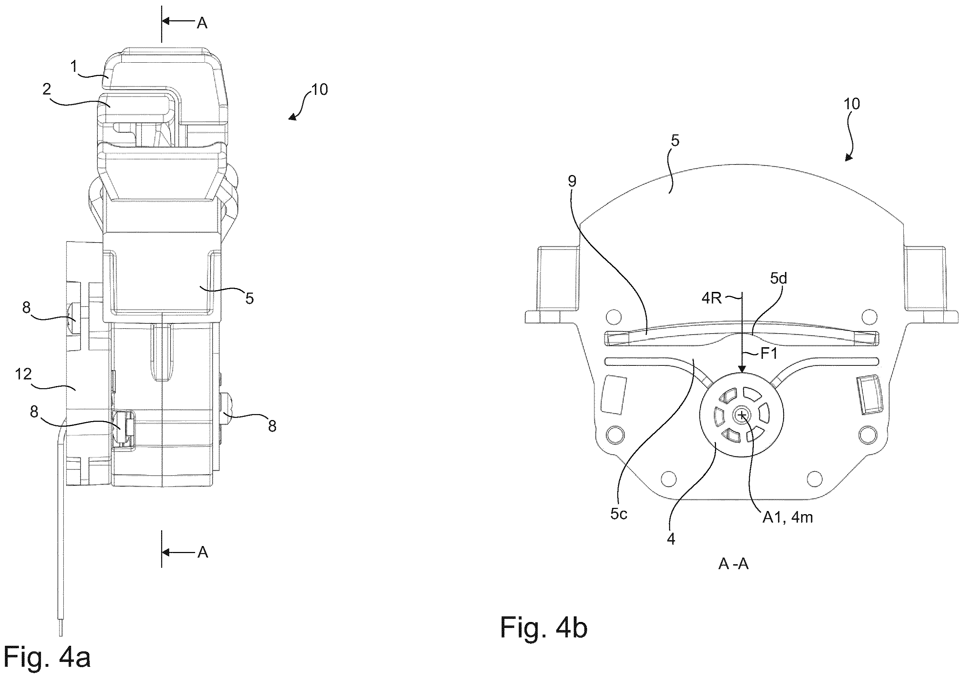

Bevorzugt weisen das zweite 2 und das dritte Hebelelement 3 am ersten Ende 2a, 3a jeweils eine kreisförmige und konzentrisch zu diesem äußeren kreisförmigen Umfang angeordnete Bohrung 2h, 3h auf (siehe auch Fig. 1b). Der Innendurchmesser dieser Bohrung 2h, 3h ist bevorzugt bei diesen beiden Hebelelementen 2, 3 gleich. Da das zweite 2 und das dritte Hebelelement 3 zum Wellenelement 4 bevorzugt kontaktlos und wechselwirkungsfrei ausgebildet sein sollen, weisen die Bohrungen 2h, 3h jeweils einen Innendurchmesser 2hd, 3hd auf, welcher größer ist als der Außendurchmesser 4d des Wellenelements 4 (siehe auch Darstellung gemäß Fig. 4a).

Das erste Hebelelement 1 weist mindestens eine Aussparung 22 am ersten Ende 1a auf, welche mehrere Teilaussparungen 23 und 24a-e umfasst und durchgehend ausgebildet ist. Eine erste Teilaussparung 23 ist kreisförmig und konzentrisch zum äußeren kreisförmigen Umfang des ersten Endes 1a des ersten Hebelelements 1 angeordnet.

Wie gemäß der Fig. 2c gezeigt ist, fluchten sowohl die Bohrungen 2h, 3h als auch die Teilaussparung 23 hinsichtlich ihrer dazugehörigen Mittelachse mit der ersten Drehachse A1.

Zweite Teilaussparungen 24a-e sind jeweils zunächst in Form eines Kreissektorelements ausgebildet. Der Durchmesser des äußeren Bogens des Kreissektorelements entspricht dabei dem Durchmesser eines zugrundeliegenden virtuellen Kreises K (siehe gestrichelte Darstellung gemäß Fig. 2a). Bevorzugt sind die zweiten Teilaussparungen 24a-e radial verteilt um den Mittelpunkt des zugrundeliegenden virtuellen Kreises K angeordnet. Dieser Mittelpunkt liegt bevorzugt auf der ersten Drehachse A1. Bevorzugt sind insgesamt fünf zweite Aussparungen 24a-e angeordnet. Beispielsweise sind diese mit gleichmäßigem Winkelabstand zueinander angeordnet.

In Richtung zum Mittelpunkt des zugrundeliegenden Kreises K werden die Kreissektorelemente begrenzt durch einen Bogen, welcher den gleichen Durchmesser aufweist wie ein Außendurchmesser der ersten Teilaussparung 23. Damit sind die erste Teilaussparung 23 und die zweiten Teilaussparungen 24a-e bevorzugt miteinander verbunden und bilden gemeinsam die durchgehende Aussparung 22 aus.

Wird der zugrundeliegende virtuelle Kreis K gedanklich in vier Quadranten Q1, Q2, Q3, Q4 aufgeteilt, so umfasst jeder Quadrant Q1, Q2, Q3, Q4 ein Viertel des Kreises K. In Blickrichtung entlang der ersten Drehachse A1 ausgehend vom zweiten Hebelelement 2 fängt der erste Quadrant Q1 in einer Grundstellung PG des ersten Hebelelements 1 beispielsweise bei einer Position an, welcher der 12 Uhr-Stellung von Uhrzeigern entspricht. Er umfasst demnach beispielsweise die Winkelabschnitte von 0° bis 90° des Kreises K. Analog dazu umfasst der zweite Quadrant Q2 die Winkelabschnitte von >90° bis 180°, der dritte Quadrant Q3 die Winkelabschnitte von >180° bis 270° und der vierte Quadrant Q4 die Winkelabschnitte von >270° bis 360°.

Bevorzugt umfassen der erste Q1 und der dritte Quadrant Q3 jeweils genau zwei zweite Teilaussparungen 24a und 24b bzw. 24d und 24e und genau einen hinsichtlich der Winkelabschnitte dazwischenliegenden Abschnitt 25a bzw. 25d, welcher jeweils bis auf seinen Anteil an der ersten Teilaussparung 23 frei von Aussparungen ist. Bevorzugt umfasst der zweite Quadrant Q1 genau eine zweite Teilaussparung 24c und genau zwei hinsichtlich der Winkelabschnitte dazwischenliegenden Abschnitte 25b und 25c, welche bis auf ihren Anteil an der ersten Teilaussparung 23 frei von Aussparungen sind.

Bevorzugt ist der vierte Quadrant Q4 bis auf seinen Anteil an der ersten Teilaussparung 23 frei von Aussparungen und damit insbesondere frei von zweiten Aussparungen 24a-e. Ein Verzicht auf zusätzliche zweite Aussparungen erhöht die Festigkeit des ersten Hebelelements 1. Gleichzeitig ist durch die Anzahl der restlichen zweiten Aussparungen 24a-e dafür gesorgt, dass eine mechanisch sichere Verbindung zwischen Wellenelement 4 und erstem Hebelelement 1 gewährleistet ist.

Bevorzugt erstrecken sich sowohl die zweiten Teilaussparungen 24a-e als auch die dazwischenliegenden Abschnitte 25a-d des ersten Q1, zweiten Q2 und dritten Quadranten Q3 jeweils über einen Winkelbereich von 30°.

Fig. 2b zeigt mittels der zwischen dem ersten 1 und dem zweiten Hebelelement 2 ausgebildeten Spaltmaßen 26a, 26b, dass das erste Hebelelement 1 und das zweite Hebelelement 2 zueinander hinsichtlich der Verschwenkung um die erste Drehachse A1 kontaktlos und wechselwirkungsfrei ausgestaltet sind. Die beiden Hebelelemente 1, 2 berühren sich also bei einer Verschwenkung um die erste Drehachse A1 nicht.

Zu sehen ist gemäß Fig. 2c, dass die drei Hebelelemente 1, 2, 3 zusammen ein resultierendes Griffelement 17 ausbilden. Dieses Griffelement 17 ist in der gezeigten gemeinsamen Position P0 der drei Hebelelemente 1, 2, 3, welche hier auch der Grundstellung PG der drei Hebelelemente 1, 2, 3 entspricht, zumindest hinsichtlich seiner Einhüllenden symmetrisch um eine Mittelebene E1 ausgebildet. Die Mittelebene E1 ist zumindest in der Grundstellung PG parallel zu den Richtungen 1y1 und 1z1 ausgebildet und schneidet vorteilhaft die erste Drehachse A1.

Ein Koordinatensystem veranschaulicht verschiedene Richtungen unter der Annahme, dass das (nicht gezeigte) Fahrzeug auf ebenem Grund steht: 1z1 in Höhenrichtung des Fahrzeugs nach oben, 1z2 in Höhenrichtung des Fahrzeugs nach unten, 1y1 in Breitenrichtung des Fahrzeugs nach links, 1y2 in Breitenrichtung des Fahrzeugs nach rechts, 1x1 in Längsrichtung des Fahrzeugs nach hinten, 1x2 in Längsrichtung des Fahrzeugs nach vorne (also in Fahrtrichtung bei einer Vorwärtsfahrt).

Die Fig. 3 zeigt eine Explosionsdarstellung der Baugruppe der erfindungsgemäßen Hebeleinrichtung 10, wobei bevorzugt alle Komponenten der Baugruppe abgebildet sind. Die Hebeleinrichtung 10 umfasst demnach die drei Hebelelemente 1, 2, 3, ein Wellenelement 4, ein Gehäuse 5, vier Buchsen 6, zwei Friktionsplatten 7a, 7b, fünf Schrauben 8, einen Friktionsdraht 9, einen Magneten 11 und eine Sensorbaugruppe 12.

Zu sehen ist auch, dass an einem Innendurchmesser der Aussparung der Buchsen 6 ein Rastelement angeordnet ist, welches mit einem Gegenrastelement (nicht gezeigt) des Gehäuses 5 wechselwirkt. Vorliegend ist das Rastelement in Form eines Vorsprungs ausgestaltet, welcher beispielsweise die Form eines Halbkreises (wie abgebildet) aufweist.

In Richtung der ersten Drehachse A1 ausgehend von der Sensorbaugruppe 12 sind das zweite Hebelelement 2 bevorzugt vor dem dritten Hebelelement 3 und/ oder das dritte Hebelelement 3 bevorzugt vor dem ersten Hebelelement 1 angeordnet.

Bevorzugt dreht sich der Magnet 11 in der Hebeleinrichtung 10 mit dem Wellenelement 4 und damit mit dem ersten Hebelelement 1 mit. Eine Verschwenkungsbewegung des ersten Hebelelements 1 ist also auf den Magneten 11 übertragbar. Ein Hall-Sensor der Sensorbaugruppe 12 detektiert die Bewegung bzw. Verschwenkung des Magneten 11 und sendet ein entsprechendes Signal an eine übergeordnete Steuereinrichtung (nicht gezeigt). Diese sendet wiederum je nach Motor ein Signal an Elemente des Motors wie Einspritzsysteme oder Drosselelemente mit der Wirkung, dass die Motordrehzahl an die neue Motordrehzahl, welche aus der gewählten neuen Position des ersten Hebelelements 1 resultiert, angepasst wird. Die Wirkweise des Hall-Sensors ist aus dem Stand der Technik jedoch bereits bestens bekannt und soll im Rahmen der vorliegenden Erfindung nicht weiter betrachtet werden.

Gemäß der Fig. 4b ist eine Schnittansicht der montierten Baugruppe der erfindungsgemäßen Hebeleinrichtung 10 entlang der Ebene A-A der Fig. 4a gezeigt.

Zu sehen ist, dass das Wellenelement 4 zumindest indirekt mit einer zumindest in radialer Richtung 4R des Wellenelements 4 wirkenden und mittels eines ersten Friktionselements 9 applizierten ersten Kraft F1 beaufschlagbar ist. Das erste Friktionselement 9 ist in Form eines Friktionsdrahts ausgestaltet, welcher in radialer Richtung 4R des Wellenelements 4 vorgespannt im Gehäuse 5 der Hebeleinrichtung 10 gelagert ist. Dabei liegt der Friktionsdraht auf einer kreisbogenförmigen Erhöhung 5d eines Zwischenabschnitts 5c des Gehäuses 5 auf. Der Zwischenabschnitt 5c überträgt die Kraft F1 auf das Wellenelement 4.

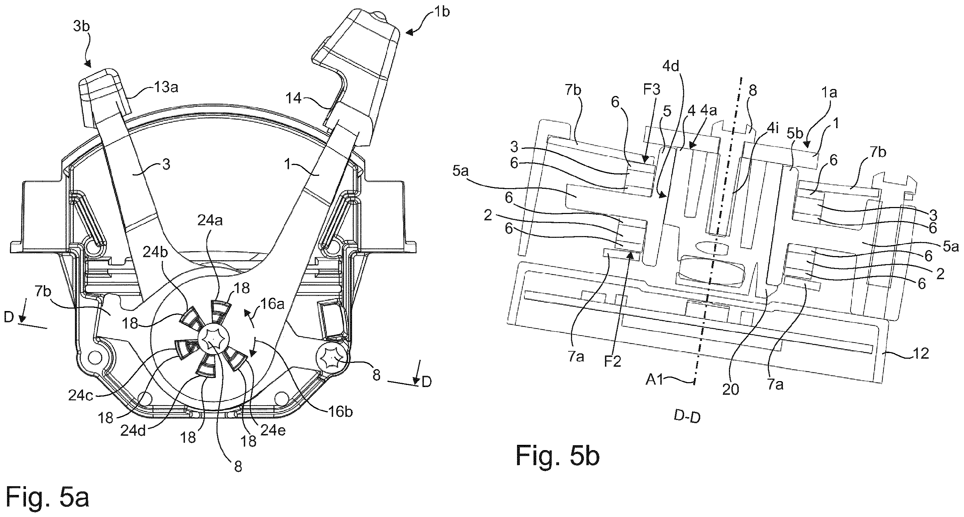

Zusammenfassend ist also eine Realisierungsmöglichkeit für eine Hebeleinrichtung 10 gezeigt, bei der ein Wert eines ersten Haftreibmoments des ersten Hebelelements 1 kleiner ist als ein Wert eines zweiten Haftreibmoments des zweiten Hebelelements 2 und als ein Wert eines dritten Haftreibmoments des dritten Hebelelements 3. Gleichzeitig ist gewährleistet, dass ein Wert eines ersten Gleitreibmoments des ersten Hebelelements 1 kleiner ist als ein Wert eines zweiten Gleitreibmoments des zweiten Hebelelements 2 und als ein Wert eines dritten Gleitreibmoments TG3 des dritten Hebelelements 3. Dies wird durch die unterschiedliche Lagerung der Hebelelemente 1, 2, 3 innerhalb der Hebeleinrichtung 10, die unterschiedlichen Friktionselemente 7a, 7b, 9 und deren unterschiedliche Orientierung und die daraus resultierende Richtung der Vorspannungskraft F1 (siehe Fig. 4b), F2 und/ oder F3 (siehe Fig. 5b) erzielt.

Bevorzugt sind die Kraftvektoren der Kräfte F2 und F3 parallel zur ersten Drehachse A1 und/ oder senkrecht zum Kraftvektor der Kraft F1 angeordnet. Bevorzugt ist der Kraftvektor der Kraft F1 senkrecht zur ersten Drehachse A1 angeordnet.

Aus den Fig. 5a und 5b ist ersichtlich, dass das Wellenelement 4 durch eine entsprechende mittels eines Abschnitts 5b des Gehäuses begrenzte Bohrung im Gehäuse 5 geführt ist. Ferner fluchtet das Wellenelement 4 hinsichtlich seiner Mittelachse 4m mit der Drehachse A1 und weist an einer ersten Stirnfläche 4a Erhebungen 18 auf, welche in am ersten Ende 1a des ersten Hebelelements 1 angeordnete und bevorzugt komplementär zu den Erhebungen 18 ausgestaltete Aussparungen 24a-e (siehe Beschreibung zur Fig. 2a und 2c) eingreifen. Damit ist das das erste Hebelelement 1 hinsichtlich einer Verdrehung um das Wellenelement 4 fixiert. An einer zweiten Stirnfläche 4b ist das Wellenelement 4 mittels eines Flanschelements 20 am Gehäuse 5 anliegend angeordnet.

Es ist außerdem eine Schraube 8 angeordnet, deren Außengewinde mit einem Innengewinde einer Bohrung 4i des Wellenelements 4 wechselwirkt. Der Flansch des Schraubenkopfs ist dabei beispielsweise kontaktierend mit dem ersten Ende 1a des ersten Hebelelements 1 ausgebildet. Damit ist das das erste Hebelelement 1 mit dem Wellenelement 4 starr verbunden.

Zu beiden Seiten einer Mittelplatte 5a des Gehäuses 5 in Richtung der Drehachse A1 ist jeweils eine Baugruppe konzentrisch um das Wellenelement 4, aber mittels des Gehäuses 5 und insbesondere mittels des rohrförmigen Abschnitts 5b des Gehäuses 5 zu diesem Wellenelement 4 beabstandet angeordnet, wobei die Baugruppe jeweils zwei Buchsen 6 und das zweite 2 oder das dritte Hebelelement 3 umfasst. An diese beiden Baugruppen schließt sich jeweils ein Friktionselement 7a oder 7b an, welches ebenfalls konzentrisch um das Wellenelement 4, aber mittels des Gehäuses 5 und insbesondere mittels des rohrförmigen Abschnitts 5b des Gehäuses 5 zu diesem Wellenelement 4 beabstandet angeordnet sind. Bevorzugt sind die beiden Buchsen 6 als Bundbuchsen oder Sinterbundbuchsen ausgestaltet, deren Bund gleichzeitig die Lagerung der Hebelelemente 2, 3 ermöglicht. Bevorzugt sind die Hebelelemente 2 und/ oder 3 kontaktlos zum Gehäuse 5 angeordnet. Weiterhin bevorzugt sind die Hebelelemente 1, 2 und 3 untereinander kontaktlos angeordnet.

Das zweite 2 und das dritte Hebelelement 3 sind mittels dieser Anordnung zumindest indirekt mit einer zumindest in Richtung der ersten Drehachse A1 wirkenden zweiten Kraft F2 des zweiten Friktionselements 7a und/ oder einer in Richtung der ersten Drehachse A1 wirkenden dritten Kraft F3 des dritten Friktionselements 7b beaufschlagbar.

Das zweite 7a und das dritte Friktionselement 7b ist hier jeweils in Form einer Friktionsplatte ausgestaltet, welche in Richtung der ersten Drehachse A1 vorgespannt im Gehäuse 5 der Hebeleinrichtung 10 gelagert ist. Im nicht-eingebauten Zustand sind die Friktionsplatten dabei gerade ausgestaltet. Im Gehäuse 5 eingebaut verformen sie sich und applizieren eine Kraft F2 oder F3 über die Buchsen 6 auf die Hebelelemente 2 und 3 (nochmals zu sehen anhand der Fig. 5b, welche einem Querschnitt der Hebeleinrichtung 10 entlang D-D gemäß Fig. 5a entspricht).

Fig. 5a zeigt ferner, dass an einem zweiten Ende 3b des dritten Hebelelements 3 ein erstes Anschlagelement 13a ausgebildet ist, mittels welchem ein an einem zweiten Ende 1b des ersten Hebelelements 1 angeordnetes erstes Gegenanschlagelement 14 wechselwirkbar ist.

Das erste Hebelelement 1 ist also hinsichtlich einer Verschwenkung um die erste Drehachse A1 zumindest in die erste Drehrichtung 16a vom dritten Hebelelement 3 stoppbar. Das erste Hebelelement 1 kann also nicht weiter in die erste Drehrichtung 16a verschwenkt werden als bis zum dritten Hebelelement 3. Damit ist also eine Veränderung der Motordrehzahl über einen bestimmten, mittels einer Position des dritten Hebelelements 3 festlegbaren Maximalwert hinaus nicht möglich.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1, 2, 3: Hebelelement
- 1a, 1b, 2a, 2b, 3a, 3b: Ende
- 1c, 2c, 3c: mittlerer Abschnitt
- 1g1, 1g2, 1g3; 2g1, 2g2; 3g3: Grifffläche
- 2h, 3h: Bohrung
- 2hd, 3hd: Innendurchmesser
- 4: Wellenelement
- 4a, 4b: Stirnfläche
- 4d: Außendurchmesser
- 4m: Mittelachse
- 4R: radiale Richtung
- 5: Gehäuse
- 5a: Mittelplatte
- 5b: rohrförmiger Abschnitt
- 5c: Zwischenabschnitt
- 5d: kreisbogenförmige Erhöhung
- 6: Buchse
- 7: Friktionsplatte
- 8: Montageelement
- 9: Friktionskabel
- 10: Hebeleinrichtung
- 11: Magnet
- 12: Sensorbaugruppe
- 13a, 13b: Anschlagelement
- 14, 15: Gegenanschlagelement
- 16a, 16b: Drehrichtung
- 17, 17a, 17b, 17c: Griffelement
- 18: Erhebungen
- 20: Flanschelement
- 21a, 21b, 21c: Lagerelement
- 22: Aussparung
- 23, 24a-f: Teilaussparung
- 25a-d: Abschnitte
- 26a, 26b: Spaltmaß
- A1: Drehachse
- E1: Ebene
- F1, F2, F3: Kraft
- K: virtueller Kreis
- P0: gemeinsame Position
- PG: Grundposition
- Q1-4: Quadrant

## Patentansprüche

1. Manuell bedienbare Hebeleinrichtung (10) zur Regelung eines Werts einer Motordrehzahl eines Fahrzeugs, wobei die Hebeleinrichtung (10) ein erstes (1), ein zweites (2) und ein drittes Hebelelement (3) umfasst, welche jeweils mittels eines ersten Endes (1a, 2a, 3a) um eine gemeinsame erste Drehachse (A1) verschwenkbar angeordnet sind,
wobei mittels einer Verschwenkung des ersten Hebelelements (1) um die erste Drehachse (A1) der Wert der Motordrehzahl veränderbar ist, **dadurch gekennzeichnet, dass** mittels einer Verschwenkung des zweiten Hebelelements (2) um die erste Drehachse (A1) eine Referenzposition für das erste Hebelelement (1) einstellbar ist, und mittels einer Verschwenkung des dritten Hebelelements (3) um die erste Drehachse (A1) eine Maximalposition für das erste (1) und/ oder das zweite Hebelelement (2) einstellbar ist.

2. Manuell bedienbare Hebeleinrichtung (10) nach Anspruch 1,
**dadurch gekennzeichnet, dass**
an einem zweiten Ende (3b) des dritten Hebelelements (3) ein erstes Anschlagelement (13a) ausgebildet ist, mittels welchem ein an einem zweiten Ende (1b) des ersten Hebelelements (1) angeordnetes erstes Gegenanschlagelement (14) wechselwirkbar ist.

3. Manuell bedienbare Hebeleinrichtung (10) nach Anspruch 1,
**dadurch gekennzeichnet, dass**
am zweiten Ende (3b) des dritten Hebelelements (3) ein zweites Anschlagelement (13b) ausgebildet ist, mittels welchem ein an einem zweiten Ende (2b) des zweiten Hebelelements (2) angeordnetes zweites Gegenanschlagelement (15) wechselwirkbar ist.

4. Manuell bedienbare Hebeleinrichtung (10) nach Anspruch 1 oder 2,
**dadurch gekennzeichnet, dass**
das erste Hebelelement (1) und das zweite Hebelelement (2) zueinander hinsichtlich der Verschwenkung um die erste Drehachse (A1) kontaktlos und/ oder wechselwirkungsfrei ausgestaltet sind.

5. Manuell bedienbare Hebeleinrichtung (10) nach einem der Ansprüche 1-4,
**dadurch gekennzeichnet, dass**
das erste (1), das zweite (2) und das dritte Hebelelement (3) jeweils mittels einer Überwindung eines Haftreibmoments aus einer momentanen Position um die erste Drehachse auslenkbar und mittels einer Überwindung eines Gleitreibmoments um die erste Drehachse verschwenkbar sind,
wobei ein Wert eines ersten Haftreibmoments des ersten Hebelelements (1) kleiner ist als ein Wert eines zweiten Haftreibmoments des zweiten Hebelelements (2) und als ein Wert eines dritten Haftreibmoments des dritten Hebelelements (3), und/ oder wobei ein Wert eines ersten Gleitreibmoments des ersten Hebelelements (1) kleiner ist als ein Wert eines zweiten Gleitreibmoments des zweiten Hebelelements (2) und als ein Wert eines dritten Gleitreibmoments des dritten Hebelelements (3).

6. Manuell bedienbare Hebeleinrichtung (10) nach einem der Ansprüche 1-5,
**dadurch gekennzeichnet, dass**
das erste Hebelelement (1) mit einem mit der ersten Drehachse (A1) fluchtenden Wellenelement (4) der Hebeleinrichtung (10) starr verbunden ist, wobei das Wellenelement (4) zumindest indirekt mit einer zumindest in radialer Richtung (4R) des Wellenelements (4) wirkenden und mittels eines ersten Friktionselements (9) applizierten ersten Kraft (F1) beaufschlagbar ist.

7. Manuell bedienbare Hebeleinrichtung (10) nach Anspruch 6,
**dadurch gekennzeichnet, dass**
das erste Friktionselement (9) in Form eines Friktionsdrahts ausgestaltet ist, welcher in radialer Richtung (4R) des Wellenelements (4) vorgespannt in einem Gehäuse (5) der Hebeleinrichtung (10) gelagert ist.

8. Manuell bedienbare Hebeleinrichtung (10) nach einem der Ansprüche 1-7,
**dadurch gekennzeichnet, dass**
das zweite (2) und/ oder das dritte Hebelelement (3) zumindest indirekt mit einer zumindest in Richtung der ersten Drehachse (A1) wirkenden zweiten Kraft (F2) eines zweiten Friktionselements (7a) und/ oder einer in Richtung der ersten Drehachse (A1) wirkenden dritten Kraft (F3) eines dritten Friktionselements (7b) beaufschlagbar ist.

9. Manuell bedienbare Hebeleinrichtung (10) nach Anspruch 8,
**dadurch gekennzeichnet, dass**
das zweite (7a) und/ oder das dritte Friktionselement (7b) in Form einer Friktionsplatte ausgestaltet ist, welche in Richtung der ersten Drehachse (A1) vorgespannt im Gehäuse (5) der Hebeleinrichtung (10) gelagert ist.

10. Manuell bedienbare Hebeleinrichtung (10) nach einem der Ansprüche 1-9,
**dadurch gekennzeichnet, dass**
an den oberen Enden (1b, 2b, 3b) des ersten (1), zweiten (2) und dritten Hebelelements (1, 2, 3) angeordnete Griffflächen (1g1, 1g2, 1g3; 2g1, 2g2; 3g3) in einer gemeinsamen Position (P0) der drei Hebelelemente (1, 2, 3) zueinander zumindest paarweise (1g1, 2g1; 1g2, 2g2; 1g3; 2g3, 3g3) parallel und/ oder bündig angeordnet sind.

## Claims

1. Manually operable lever device (10) for controlling a value of an engine speed of a vehicle, the lever device (10) comprising a first (1), a second (2) and a third lever element (3), which are each pivotably arranged about a common first rotational axis (A1) by means of a first end (1a, 2a, 3a), the value of the engine speed being changeable by pivoting the first lever element (1) about the first rotational axis (A1),
**characterised in that**
a reference position for the first lever element (1) is adjustable by pivoting the second lever element (2) about the first rotational axis (A1), and a maximum position for the first (1) and/or the second lever element (2) is adjustable by pivoting the third lever element (3) about the first rotational axis (A1).

2. Manually operable lever device (10) according to claim 1,
**characterised in that**
a first stop element (13a) is formed at a second end (3b) of the third lever element (3), by means of which a first counter-stop element (14) arranged at a second end (1b) of the first lever element (1) can interact.

3. Manually operable lever device (10) according to claim 1,
**characterised in that**
a second stop element (13b) is formed at the second end (3b) of the third lever element (3), by means of which a second counter-stop element (15) arranged at a second end (2b) of the second lever element (2) can interact.

4. Manually operable lever device (10) according to claim 1 or 2,
**characterised in that**
the first lever element (1) and the second lever element (2) are designed to be without contact and/or without interaction between one another with respect to the pivoting about the first rotational axis (A1).

5. Manually operable lever device (10) according to any of claims 1 to 4,
**characterised in that**
the first (1), the second (2) and the third lever element (3) can each be deflected about the first rotational axis from a current position by overcoming a static friction torque, and can be pivoted about the first rotational axis by overcoming a sliding friction torque, a value of a first static friction torque of the first lever element (1) being smaller than a value of a second static friction torque of the second lever element (2) and than a value of a third static friction torque of the third lever element (3), and/or a value of a first sliding friction torque of the first lever element (1) being smaller than a value of a second sliding friction torque of the second lever element (2) and than a value of a third sliding friction torque of the third lever element (3).

6. Manually operable lever device (10) according to any of claims 1 to 5,
**characterised in that**
the first lever element (1) is rigidly connected to a shaft element (4) of the lever device (10) aligned with the first rotational axis (A1), a first force (F1) can be applied at least indirectly on the shaft element (4), the first force (F1) acting at least in the radial direction (4R) of the shaft element (4) and is applied by means of a first friction element (9).

7. Manually operable lever device (10) according to claim 6,
**characterised in that**
the first friction element (9) is in the form of a friction wire, which is mounted in a housing (5) of the lever device (10) so as to be biased in the radial direction (4R) of the shaft element (4).

8. Manually operable lever device (10) according to any of claims 1 to 7,
**characterised in that**
a second force (F2) of a second friction element (7a) acting at least in the direction of the first rotational axis (A1) can be applied on the second (2) and/or the third lever element (3) at least indirectly and/or a third force (F3) of a third friction element (7b) acting in the direction of the first rotational axis (A1).

9. Manually operable lever device (10) according to claim 8,
**characterised in that**
the second (7a) and/or the third friction element (7b) is in the form of a friction plate, which is mounted in the housing (5) of the lever device (10) so as to be biased in the direction of the first rotational axis (A1).

10. Manually operable lever device (10) according to any of claims 1 to 9,
**characterised in that** gripping surfaces (1g1, 1g2, 1g3; 2g1, 2g2; 3g3), which are arranged at the upper ends (1b, 2b, 3b) of the first (1), second (2) and third lever element (1, 2, 3), are arranged, in a common position (P0) of the three lever elements (1, 2, 3), so as to be parallel and/or flush to one another at least in pairs (1g1, 2g1; 1g2, 2g2; 1g3; 2g3, 3g3).

## Revendications

1. Dispositif levier à commande manuelle (10) pour la régulation d'une valeur d'un régime moteur d'un véhicule,
dans lequel le dispositif levier (10) comporte un premier (1), un deuxième (2) et un troisième élément levier (3),
lesquels sont disposés aptes à pivoter autour d'un premier axe de rotation commun (A1) chacun au moyen d'une première extrémité (1a, 2a, 3a),
dans lequel, au moyen d'un pivotement du premier élément levier (1) autour du premier axe de rotation (A1), la valeur du régime moteur est modifiable,
**caractérisé par le fait qu'**
au moyen d'un pivotement du deuxième élément levier (2) autour du premier axe de rotation (A1), une position de référence pour le premier élément levier (1) est ajustable, et au moyen d'un pivotement du troisième élément levier (3) autour du premier axe de rotation (A1), une position maximale pour le premier (1) et/ou le deuxième élément levier (2) est ajustable.

2. Dispositif levier à commande manuelle (10) selon la revendication 1,
**caractérisé par le fait que**
sur une seconde extrémité (3b) du troisième élément levier (3), un premier élément butée (13a) est formé, avec lequel un premier élément contre-butée (14) disposé sur une seconde extrémité (1b) du premier élément levier (1) est apte à interagir.

3. Dispositif levier à commande manuelle (10) selon la revendication 1,
**caractérisé par le fait que**
sur la seconde extrémité (3b) du troisième élément levier (3), un second élément butée (13b) est formé, avec lequel un second élément contre-butée (15) disposé sur une seconde extrémité (2b) du deuxième élément levier (2) est apte à interagir.

4. Dispositif levier à commande manuelle (10) selon l'une des revendications 1 et 2,
**caractérisé par le fait que**
le premier élément levier (1) et le deuxième élément levier (2) sont agencés sans contact et/ou sans interaction l'un par rapport à l'autre en ce qui concerne le pivotement autour du premier axe de rotation (A1).

5. Dispositif levier à commande manuelle (10) selon l'une des revendications 1 à 4,
**caractérisé par le fait que**
le premier (1), le deuxième (2) et le troisième élément levier (3) sont aptes à être déviés à partir d'une position actuelle autour du premier axe de rotation chacun au moyen d'un dépassement d'un moment de frottement par adhérence et sont aptes à pivoter autour du premier axe de rotation au moyen d'un dépassement d'un moment de frottement par glissement,
dans lequel une valeur d'un premier moment de frottement par adhérence du premier élément levier (1) est plus petite qu'une valeur d'un deuxième moment de frottement par adhérence du deuxième élément levier (2) et qu'une valeur d'un troisième moment de frottement par adhérence du troisième élément levier (3), et/ou dans lequel une valeur d'un premier moment de frottement par glissement du premier élément levier (1) est plus petite qu'une valeur d'un deuxième moment de frottement par glissement du deuxième élément levier (2) et qu'une valeur d'un troisième moment de frottement par glissement du troisième élément levier (3).

6. Dispositif levier à commande manuelle (10) selon l'une des revendications 1 à 5,
**caractérisé par le fait que**
le premier élément levier (1) est relié de façon rigide à un élément arbre (4), en alignement avec le premier axe de rotation (A1), du dispositif levier (10), l'élément arbre (4) étant apte à être sollicité au moins indirectement par une première force (F1) agissant au moins dans la direction radiale (4R) de l'élément arbre (4) et appliquée au moyen d'un premier élément de friction (9).

7. Dispositif levier à commande manuelle (10) selon la revendication 6,
**caractérisé par le fait que**
le premier élément de friction (9) est agencé sous la forme d'un fil de friction, lequel est monté dans un boîtier (5) du dispositif levier (10) précontraint dans la direction radiale (4R) de l'élément arbre (4).

8. Dispositif levier à commande manuelle (10) selon l'une des revendications 1 à 7,
**caractérisé par le fait que**
le deuxième (2) et/ou le troisième élément levier (3) sont aptes à être sollicités au moins indirectement par une deuxième force (F2) d'un deuxième élément de friction (7a), agissant au moins dans la direction du premier axe de rotation (A1) et/ou par une troisième force (F3) d'un troisième élément de friction (7b), agissant dans la direction du premier axe de rotation (A1).

9. Dispositif levier à commande manuelle (10) selon la revendication 8,
**caractérisé par le fait que**
le deuxième (7a) et/ou le troisième élément de friction (7b) sont agencés sous la forme d'une plaque de friction, laquelle est montée dans le boîtier (5) du dispositif levier (10), précontrainte dans la direction du premier axe de rotation (A1).

10. Dispositif levier à commande manuelle (10) selon l'une des revendications 1 à 9,
**caractérisé par le fait que**
des surfaces de prise (1g1, 1g2, 1g3 ; 2g1, 2g2 ; 3g3) disposées sur les extrémités supérieures (1b, 2b, 3b) du premier (1), deuxième (2) et troisième élément levier (3) sont disposées parallèlement et/ou en affleurement les unes par rapport aux autres au moins par paires (1g1, 2g1 ; 1g2, 2g2 ; 1g3, 2g3, 3g3) dans une position commune (P0) des trois éléments leviers (1, 2, 3).
